(19) Europäisches Patentamt
European Patent Office
Office européen des brevets

(11) Veröffentlichungsnummer: **0 465 963 B1**

(12) # EUROPÄISCHE PATENTSCHRIFT

(45) Veröffentlichungstag der Patentschrift: **22.03.95**

(51) Int. Cl.⁶: **C09B 29/033**, C09B 29/09, C09B 43/32, C09B 43/40

(21) Anmeldenummer: **91110820.7**

(22) Anmeldetag: **29.06.91**

Die Akte enthält technische Angaben, die nach dem Eingang der Anmeldung eingereicht wurden und die nicht in dieser Patentschrift enthalten sind.

(54) **Thiophenazofarbstoffe.**

(30) Priorität: **10.07.90 DE 4021960**

(43) Veröffentlichungstag der Anmeldung:
**15.01.92 Patentblatt 92/03**

(45) Bekanntmachung des Hinweises auf die Patenterteilung:
**22.03.95 Patentblatt 95/12**

(84) Benannte Vertragsstaaten:
**CH DE FR GB IT LI**

(56) Entgegenhaltungen:
**EP-A- 0 035 671**
**GB-A- 2 163 768**

**RESEARCH DISCLOSURE.no. 19826, Oktober 1980, HAVANT GB Seiten 425-427; ANONYMOUS: 'Discharge/resist printing of synthetic textile materials using thiophene-azo disperse dyestuffs in the presence of alkali'**

(73) Patentinhaber: **BASF Aktiengesellschaft**
**Carl-Bosch-Strasse 38**
**D-67063 Ludwigshafen (DE)**

(72) Erfinder: **Hahn, Erwin, Dr.**
**Am Buechsenackerhang 31**
**W-6900 Heidelberg (DE)**
Erfinder: **Hansen, Guenter, Dr.**
**Alwin-Mittasch-Platz 8**
**W-6700 Ludwigshafen (DE)**
Erfinder: **Etzbach, Karl-Heinz, Dr.**
**Carl-Bosch-Strasse 55**
**W-6710 Frankenthal (DE)**
Erfinder: **Reichelt, Helmut, Dr.**
**Johann-Gottlieb-Fichte-Strasse 56**
**W-6730 Neustadt (DE)**
Erfinder: **Schefczik, Ernst, Dr.**
**Dubliner-Strasse 7**
**W-6700 Ludwigshafen (DE)**
Erfinder: **Gruettner, Sabine, Dr.**
**Neuweg 11**
**W-6704 Mutterstadt (DE)**
Erfinder: **Degen, Helmut**
**Wildstrasse 32**
**W-6710 Frankenthal (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 465 963 B1

## Beschreibung

Die vorliegende Erfindung betrifft neue Thiophenazofarbstoffe der allgemeinen Formel I

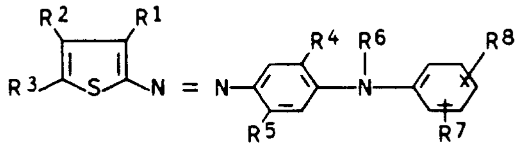

I

in welcher die Substituenten folgende Bedeutung haben:

- $R^1$ eine Cyanogruppe oder eine $C_1$-$C_4$-Alkoxycarbonylgruppe;
- $R^2$ Halogen;
  eine $C_1$-$C_6$-Alkylgruppe, deren C-Kette durch ein oder zwei Sauerstoffatome in Etherfunktion unterbrochen sein kann;
  eine $C_1$-$C_6$-Alkoxygruppe oder eine $C_1$-$C_6$-Alkylthiogruppe, die jeweils Phenyl als Substituent tragen kann;
  eine Phenylthiogruppe oder eine Phenylsulfonylgruppe, die jeweils Halogen, $C_1$-$C_4$-Alkyl oder $C_1$-$C_4$-Alkoxy als Substituenten tragen kann;
- $R^3$ eine Cyanogruppe;
  eine $C_1$-$C_4$-Alkanoyl-, Benzoyl-, $C_1$-$C_4$-Alkylsulfonyl- oder Phenylsulfonylgruppe;
- $R^4$ Wasserstoff;
  eine Cyanogruppe;
  eine $C_1$-$C_4$-Alkoxygruppe, die Hydroxy oder $C_1$-$C_4$-Alkoxy als Substituenten tragen kann;
  eine $C_1$-$C_4$-Alkoxycarbonyl-, Aminocarbonyl- oder Mono- oder Di-$C_1$-$C_4$-alkylaminocarbonylgruppe;
- $R^5$ Wasserstoff;
  eine $C_1$-$C_4$-Alkylgruppe oder eine $C_1$-$C_4$-Alkoxygruppe, die jeweils Hydroxy, $C_1$-$C_4$-Alkoxy oder $C_1$-$C_4$-Alkanoyloxy als Substituenten tragen kann;
  eine $C_1$-$C_4$-Alkanoyloxygruppe, die Hydroxy, Chlor, Cyano, $C_1$-$C_4$-Alkoxy oder Phenoxy als Substituenten tragen kann;
  eine $C_1$-$C_6$-Alkanoylaminogruppe, die Hydroxy, Chlor, Cyano, $C_1$-$C_4$-Alkoxy, Phenoxy oder $C_1$-$C_4$-Alkanoyloxy als Substituenten tragen kann;
  eine Benzoylaminogruppe, die Chlor, Cyano, Nitro, $C_1$-$C_4$-Alkyl, $C_1$-$C_4$-Alkoxy, $C_1$-$C_4$-Alkoxycarbonyl oder $C_1$-$C_4$-Alkylsulfonyl als Substituenten tragen kann;
  eine $C_1$-$C_4$-Alkoxycarbonyloxygruppe oder eine Di-$C_1$-$C_4$-alkylaminocarbonyloxygruppe, deren Alkylgruppen unter Ausbildung eines das Stickstoffatom der Aminogruppe enthaltenden 6- oder 7-gliedrigen Ringes miteinander verbunden sein können;
- $R^6$ Wasserstoff;
  eine $C_1$-$C_{10}$-Alkylgruppe, deren C-Kette durch ein bis drei Sauerstoffatome in Etherfunktion unterbrochen sein kann und die Hydroxy, Halogen, Cyano, $C_1$-$C_4$-Alkanoyloxy oder $C_1$-$C_4$-Alkoxylcarbonyl als Substituenten tragen kann;
  eine $C_3$-$C_5$-Alkenylgruppe, die Hydroxy, Halogen, $C_1$-$C_4$-Alkoxy oder $C_1$-$C_4$-Alkanoyloxy als Substituenten tragen kann;
- $R^7$ Wasserstoff;
  Halogen;
  eine Cyanogruppe;
  eine der definitionsgemäßen Alkylgruppen $R^6$;
  eine $C_1$-$C_4$-Alkoxygruppe;
  eine Aminogruppe oder eine Mono- oder Di-$C_1$-$C_4$-alkylaminogruppe;
- $R^8$ einer der Reste $R^7$

sowie deren Verwendung als Dispersionsfarbstoffe zum Färben von Textilgut.

Farbstoffe, die zum Färben von Textilgut eingesetzt werden sollen, müssen sich sowohl durch hohe Farbstärke als auch durch hohe Lichtechtheit und hohe Thermofixierechtheit auszeichnen. Insbesondere zur Erzielung tiefer Farbtöne ist gleichzeitig ein ausgezeichnetes Aufziehvermögen auf die Faser unerläßlich.

In der DE-A-39 02 005 sind Thiophenazofarbstoffe mit Kupplungskomponenten auf der Basis von Monophenylamin beschrieben. Aus den EP-A-201 896, EP-A-237 910, DE-A-35 29 831 und DE-A-35 35 133

sowie aus Research Disclosure, No. 19826, 1980, S. 425 - 427, sind Thiophenazofarbstoffe in allgemeiner Form bekannt. Farbstoffe, die Diphenylamin als Kupplungskomponente enthalten, sind jedoch nicht ausdrücklich erwähnt.

Der Erfindung lag die Aufgabe zugrunde, neue Thiophenazofarbstoffe bereitzustellen, die vorteilhafte anwendungstechnische Eigenschaften aufweisen und mit denen sich besonders farbstarke Blaufärbungen erzielen lassen.

Demgemäß wurden die eingangs definierten Thiophenazofarbstoffe I gefunden.

Weiterhin wurde gefunden, daß die Thiophenazofarbstoffe I vorteilhaft zum Färben von Textilgut verwendet werden können.

Bevorzugte Ausgestaltungen der Erfindung sind den Unteransprüchen zu entnehmen.

Besonders bevorzugter Rest $R^1$ ist die Cyanogruppe. Weiterhin geeignet sind $C_1$-$C_4$-Alkoxycarbonylgruppen wie Propoxy-, Isopropoxy- und Butoxycarbonyl, vor allem Methoxy- und Ethoxycarbonyl.

Bedeutet der Rest $R^2$ Halogen, so sind Brom und vor allem Chlor bevorzugt.

Folgende Gruppen eignen sich ebenfalls als Rest $R^2$:

- $C_1$-$C_6$-Alkylgruppen, deren C-Kette durch ein oder zwei Sauerstoffatome in Etherfunktion unterbrochen sein kann, wie Pentyl, Isopentyl, sec.-Pentyl, tert.-Pentyl, Hexyl und 2-Methylpentyl, bevorzugt Butyl; Isobutyl, sec.-Butyl und tert.-Butyl sowie besonders bevorzugt Methyl, Ethyl, Propyl und Isopropyl, auch Methoxy- und Ethoxyethyl und Methoxy- und Ethoxypropyl;
- $C_1$-$C_6$-Alkoxygruppen, die Phenyl als Substituent tragen können, wie Pentyloxy, Isopentyloxy, Neopentyloxy, Hexyloxy, Benzyloxy und 2-Phenylethoxy, bevorzugt Methoxy, Ethoxy, Propoxy, Isopropoxy, Butoxy, Isobutoxy und sec.-Butoxy;
- $C_1$-$C_6$-Alkylthiogruppen, die Phenyl als Substituenten tragen können, wie Methylthio, Ethylthio, Propylthio, Isopropylthio, Butylthiol, Pentylthio, Hexylthio, Benzylthio und 2-Phenylethylthio;
- eine Phenylthiogruppe oder eine Phenylsulfonylgruppe, die in unsubstituierter Form bevorzugt sind, aber auch Halogen, $C_1$-$C_4$-Alkyl oder $C_1$-$C_4$-Alkoxy als Substituenten tragen können; beispielsweise seien genannt (dabei bedeutet Ph = Phenyl) : -S-Ph-4-Cl und $-SO_2$-Ph-4-$CH_3$.

Als Rest $R^3$ kommen neben der bevorzugten Cyanogruppe $C_1$-$C_4$-Alkanoylgruppen wie Acetyl, Propionyl, Butyryl, Isobutyryl und ganz besonders Formyl in Betracht. Weiterhin kann $R^3$ eine Benzoyl- oder Phenylsulfonylgruppe sowie $C_1$-$C_4$-Alkylsulfonylgruppen wie Methyl-, Ethyl-, Propyl-, Isopropyl- und Butylsulfonyl bedeuten.

Besonders bevorzugte Reste $R^4$ sind Wasserstoff und die für den Rest $R^2$ aufgeführten $C_1$-$C_4$-Alkoxygruppen, die zusätzlich Hydroxy oder $C_1$-$C_4$-Alkoxy als Substituenten tragen können, wie $-O-(CH_2)_2-OH$, $-O-(CH_2)_3-OH$, $-[O-(CH_2)_2]_2-OH$, $-O-CH_2-CH(OH)-CH_2-O-CH_3$, $-O-CH_2-CH(OH)-CH_2-O-C_4H_9$, $-O-(CH_2)_2-O-CH_3$, $-O-(CH_2)_2-O-C_2H_5$, $-O-(CH_2)_2-O-C_3H_7$, $-O-(CH_2)_2-O-C_4H_9$, $-O-(CH_2)_3-O-CH_3$, $-O-(CH_2)_3-O-C_2H_5$, $-O-(CH_2)_3-O-C_3H_7$ und $-O-(CH_2)_3-O-C_4H_9$.

Bevorzugte Reste $R^4$ sind die für den Rest $R^1$ genannten $C_1$-$C_4$-Alkoxycarbonylgruppen. Weiterhin sind als Rest $R^4$ die Cyanogruppe und die Aminocarbonylgruppe und Mono- oder Di-$C_1$-$C_4$-alkylaminocarbonylgruppen wie Methyl-, Ethyl-, Propyl-, Isopropyl- und Butylaminocarbonyl sowie Dimethyl-, Methylethyl-, Diethyl- und Diisopropylaminocarbonyl geeignet.

Als Rest $R^5$ kommen neben Wasserstoff folgende Gruppen in Frage:

- $C_1$-$C_4$-Alkylgruppen, die Hydroxy, $C_1$-$C_4$-Alkoxy oder $C_1$-$C_4$-Alkanoyloxy als Substituenten tragen können, wie die für den Rest $R^2$ genannten $C_1$-$C_4$-Alkylgruppen und $-(CH_2)_2-O-CO-CH_3$ und $-(CH_2)_3-O-CO-C_2H_5$;
- $C_1$-$C_4$-Alkoxygruppen, die Hydroxy, Alkoxy oder Alkanoyloxy als Substituenten tragen können, wie die für die Reste $R^2$ bzw. $R^4$ aufgeführten Alkoxygruppen und $-O-(CH_2)_2-O-CO-CH_3$, $-O-CH_2-CH(O-CO-CH_3)-CH_2-O-CH_3$ und $-O-(CH_2)_3-O-CO-CH_3$, wobei $C_1$-$C_2$-Alkoxygruppen besonders bevorzugt sind;
- besonders bevorzugt $C_1$-$C_4$-Alkanoyloxygruppen, die vorzugsweise unsubstituiert sind, wie Formyloxy, Propionyloxy und Butyryloxy, vor allem Acetyloxy, die aber auch Hydroxy, Chlor, Cyano, Phenoxy oder besonders $C_1$-$C_4$-Alkoxy als Substituenten tragen können, z.B.: $-O-CO-CH_2-OH$, $-O-CO-CH_2-Cl$, $-O-CO-CH_2-CN$, $-O-CO-CH_2-O$-Ph und $-O-CO-CH_2-O-CH_3$;
- $C_1$-$C_6$-Alkanoylaminogruppen, die vorzugsweise unsubstituiert sind, wie Pentanoylamino, bevorzugt Formylamino und Butyrylamino sowie besonders bevorzugt Acetylamino und Propionylamino, die aber auch Hydroxy, Chlor, Cyano, vor allem $C_1$-$C_4$-Alkoxy, daneben Phenoxy oder $C_1$-$C_4$-Alkanoyloxy als Substituenten tragen können, z.B.: $-NH-CO-CH_2-OH$, $-NH-CO-CH_2-Cl$, $-NH-CO-CH_2-CN$, $-NH-CO-CH_2-O-CH_3$, $-NH-CO-CH_2-O-C_2H_5$, $-NH-CO-(CH_2)_2-O-CH_3$, $-NH-CO-(CH_2)_4-O-CH_3$, $-NH-CO-CH_2-O$-Ph und $-NH-CO-CH_2-O-CO-CH_3$;
- eine Benzoylaminogruppe, die vorzugsweise unsubstituiert ist, aber auch Chlor, Cyano, Nitro, $C_1$-$C_4$-Alkyl, $C_1$-$C_4$-Alkoxy, $C_1$-$C_4$-Alkoxycarbonyl oder $C_1$-$C_4$-Alkylsulfonyl als Substituenten tragen kann,

wie -NH-CO-Ph, -NH-CO-Ph-4-Cl, -NH-CO-Ph-4-CN, -NH-CO-Ph-4-$NO_2$, -NH-CO-Ph-2-$CH_3$, -NH-CO-Ph-4-O-$CH_3$, -NH-CO-Ph-3-CO-O-$CH_3$ und -NH-CO-Ph-4-$SO_2$-$CH_3$;

- $C_1$-$C_4$-Alkoxycarbonyloxygruppen wie -O-CO-O-$CH_3$, -O-CO-O-$C_2H_5$, -O-CO-O-$C_3H_7$, -O-CO-O-CH-$(CH_3)_2$, -O-CO-O-$C_4H_9$, -O-CO-O-$CH_2$-$CH(CH_3)_2$ und -O-CO-O-$C(CH_3)_3$;
- besonders bevorzugt Di-$C_1$-$C_4$-alkylaminocarbonyloxygruppen, deren Alkylreste auch unter Ausbildung eines das Stickstoffatom der Aminogruppe enthaltenden 6- oder 7-gliedrigen Ringes miteinander verbunden sein können, wie -O-CO-$N(CH_3)_2$, -O-CO-$N(C_2H_5)_2$, -O-CO-$N(C_3H_7)_2$, -O-CO-$N[CH(CH_3)_2]_2$, -O-CO-$N(C_4H_9)_2$, -O-CO-$N[CH_2$-$CH(CH_3)_2]_2$, -O-CO-$N[C(CH_3)_3]_2$

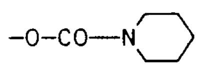, 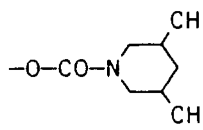 und 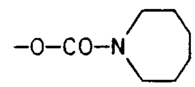 .

Eine besonders bevorzugte Bedeutung des Restes $R^6$ ist Wasserstoff. Außerdem eignen sich folgende Gruppen:

- $C_1$-$C_{10}$-Alkylgruppen wie Heptyl, Octyl, 2-Ethylhexyl, Nonyl, Decyl und verzweigte Reste dieser Art, bevorzugt Pentyl, Isopentyl, sec.-Pentyl, tert.-Pentyl, Hexyl und 2-Methylpentyl sowie besonders bevorzugt Methyl, Ethyl, Propyl, Isopropyl, Butyl, Isobutyl, sec.-Butyl und tert.-Butyl, wobei die nicht verzweigten Alkylreste bevorzugt sind; die C-Kette dieser Gruppen kann durch Sauerstoffatome in Etherfunktion unterbrochen sein, und diese Gruppen können Halogen, Cyano, $C_1$-$C_4$-Alkoxycarbonyl sowie vorzugsweise Hydroxy oder $C_1$-$C_4$-Alkanoyloxy als Substituenten tragen; als Beispiele seien hier genannt: vor allem -$(CH_2)_2$-O-$CH_3$ und -$(CH_2)_2$-O-$C_2H_5$, daneben -$(CH_2)_2$-O-$C_3H_7$, -$(CH_2)_2$-O-$C_4H_9$, -$(CH_2)_3$-O-$CH_3$, -$(CH_2)_3$-O-$C_2H_5$, -$CH_2$-$CH(CH_3)$-O-$CH_3$, -$CH_2$-$CH(CH_3)$-O-$C_2H_5$, -$(CH_2)_4$-O-$CH_3$, -$(CH_2)_4$-O-$C_2H_5$, -$CH_2$-$CH(C_2H_5)$-O-$CH_3$, -$CH_2$-$CH(C_2H_5)$-O-$C_2H_5$, -$[(CH_2)_2$-$O]_2$-$CH_3$,-$[(CH_2)_2$-$O]_2$-$C_2H_5$, -$[(CH_2)_2$-$O]_3$-$CH_3$, -$[(CH_2)_2$-$O]_4$-$CH_3$, -$[(CH_2)_3$-$O]_2$-$CH_3$ und -$[(CH_2)_3$-$O]_2$-$C_2H_5$; -$(CH_2)_2$-CN, -$(CH_2)_3$-CN, -$(CH_2)_2$-Cl, -$CH_2$-CH(Br)-$CH_3$, -$(CH_2)_2$-CO-O-$C_2H_5$, -$(CH_2)_3$-OH, -$(CH_2)_4$-OH und -$CH_2$-$CH(C_2H_5)$-OH sowie vor allem -$(CH_2)_2$-OH, -$(CH_2)_2$-O-CO-$CH_3$ und -$(CH_2)_2$-O-CO-$C_2H_5$;
- $C_3$-$C_5$-Alkenylgruppen, die vorzugsweise unsubstituiert sind, aber auch Hydroxy, Halogen` $C_1$-$C_4$-Alkoxy oder $C_1$-$C_4$-Alkanoyloxy als Substituenten tragen können; bevorzugt sind hier -$CH(CH_3)$-$CH = CH_2$, -$CH_2$-CH = CH-$CH_3$, -$CH_2$-CH = CH-$CH_2$-$CH_3$, vor allem -$CH_2$-$CH = CH_2$, daneben z.B. -$CH_2$-CH = CH-$CH_2OH$, -$CH_2$-CH = CH-Cl, -$CH_2$-CH = CH-$CH_2Cl$, -$CH_2$-CH = CH-$CH_2$-O-$CH_3$ und -$CH_2$-CH = CH-$CH_2$-O-CO-$CH_3$.

Die Reste $R^7$ oder vor allem $R^8$ bedeuten vorzugsweise Wasserstoff. Von den Halogenen sind Chlor und Brom bevorzugt. Weiterhin geeignet sind die Cyanogruppe und die oben für den Rest $R^6$ genannten $C_1$-$C_{10}$-Alkylgruppen, von denen die unsubstituierten oder durch Hydroxy substituierten $C_1$-$C_4$-Alkylgruppen besonders bevorzugt sind. Ebenfalls besonders bevorzugt sind die für den Rest $R^5$ aufgeführten $C_1$-$C_4$-Alkoxygruppen. Außerdem geeignet sind die Aminogruppe und Mono- oder Di-$C_1$-$C_4$-alkylaminogruppen wie Methyl-, Ethyl-, Propyl-, Isopropyl- ud Butylamino sowie Dimethyl-, Diethyl-, Diisopropyl- und Methylethylamino.

Die erfindungsgemäßen Thiophenazofarbstoffe I lassen sich nach an sich bekannten Methoden herstellen. Beispielsweise kann man ein Aminothiophenderivat der allgemeinen Formel II

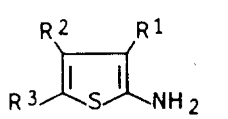 II

diazotieren und mit einem Diphenylaminderivat der allgemeinen Formel III

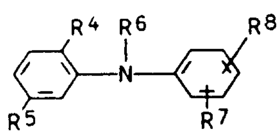 III

kuppeln.

Die Ausgangsverbindungen II und III sind bekannt oder können ebenfalls nach bekannten Methoden hergestellt werden (EP-A-193 885, DE-A-16 44 052, 17 19 060, 21 09 756 und 30 04 654).

Eine weitere Möglichkeit zur Herstellung der Thiophenazofarbstoffe I besteht in Analogie zu dem z.B. in der EP-A-237 910 beschriebenen Verfahren darin, das diazotierte Aminothiophenderivat mit einem Benzolderivat der Formel IV

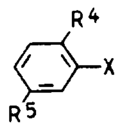

IV

in der X für Abgangsgruppen wie -Cl, $-PH-SO_3^{\ominus}$ oder $-O-R^9$ ($R^9$ bevorzugt = $C_1$-$C_6$-Alkyl, das durch Hydroxy oder Alkoxy substituiert sein kann, $C_1$-$C_4$-Alkanoyl, Phenylsulfonyl oder p-Nitrophenylsulfonyl) steht, zu kuppeln. Die Abgangsgruppe X wird anschließend in einer nucleophilen Substitution durch das Anilinderivat der Formel V

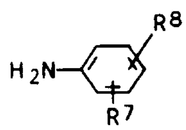

V

ausgetauscht.

Die erfindungsgemäßen Thiophenazofarbstoffe I eignen sich als Dispersionsfarbstoffe vorteilhaft zum Färben von Textilgut, insbesondere von Polyestern, daneben auch von Celluloseestern, Polyamiden oder Mischgeweben aus Polyestern und Cellulosefasern.

Um einen günstigen Farbaufbau zu erreichen, kann es in manchen Fällen von Vorteil sein, Mischungen der Farbstoffe I zum Färben zu verwenden.

Die Thiophenazofarbstoffe I zeichnen sich durch ausgezeichnetes Aufziehvermögen aus und ergeben nach dem allgemein bekannten Hochtemperatur-Färbeverfahren besonders auf Polyestern Violett-, Blau- oder Marineblaufärbungen hoher Farbstärke und sehr guter Echtheiten, vor allem guter Licht- und Thermofixierechtheit.

Beispiele

Herstellung und Anwendung von Thiophenazofarbstoffen Ia

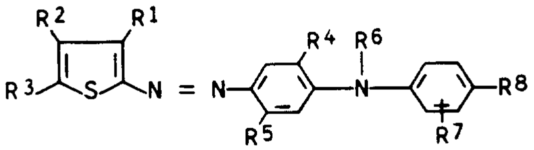

Ia

Beispiel 1

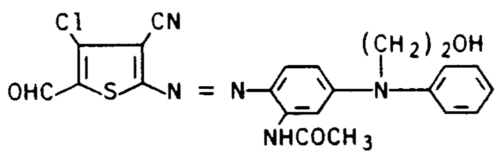

9,4 g (0,05 mol) 2-Amino-3-cyano-4-chlor-5-formylthiophen wurden bei einer Temperatur von maximal 30 °C in 60 ml 85 gew.-%iger Schwefelsäure angerührt. Innerhalb von 0,5 h wurden 16,6 g Nitrosylschwefelsäure (11,5 Gew.-% $N_2O_3$) bei 0 bis 5 °C zugetropft. Die Mischung wurde anschließend weitere 2 h bei dieser Temperatur gerührt.

Die so erhaltene Diazoniumsalzlösung wurde bei 0 bis 5 °C langsam in eine Lösung von 13,5 g (0,05 mol) N-Phenyl-N-(2-hydroxyethyl)-3-acetaminoanilin in 25 ml N,N-Dimethylformamid, 100 ml Wasser, 20 ml verdünnter Salzsäure, 0,5 g Amidosulfonsäure und 300 g Eis eingetropft.

Danach wurde der ausgefallene Farbstoff abfiltriert, neutral gewaschen und getrocknet.

Es wurden 21,7 g Farbstoff erhalten, was einer Ausbeute von 83 % entspricht.

Anschließend wurde mit dem Farbstoff ein Polyesterstapelfasergewebe nach dem Hochtemperatur-Färbeverfahren gefärbt.

Dazu wurde der Farbstoff in Dimethylformamid gelöst und der wäßrigen, essigsauren Färbeflotte zugesetzt.

In diesem Färbebad wurde die Polyesterprobe nach folgendem stufenweisem Temperaturprogramm gefärbt: zunächst einige min bei 50 bis 60 °C, dann Aufheizen auf 120 bis 140 °C innerhalb von 30 min, anschließend weitere 90 min bei dieser Temperatur.

Die danach wie üblich gewaschene und nachgereinigte Polyesterprobe zeigte eine echte marineblaue Färbung.

Die in Tabelle 1 aufgeführten Farbstoffe Ia wurden analog Beispiel 1 mit ähnlichen Ausbeuten hergestellt und ebenfalls auf ihr Färbeverhalten untersucht.

Tabelle 1

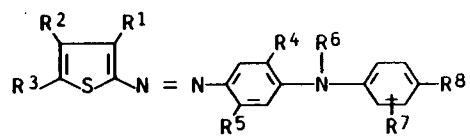

Ia

| Bsp. | $R^1$ | $R^2$ | $R^3$ | $R^4$ | $R^5$ | $R^6$ | $R^7$ | $R^8$ | Farbton auf Polyester |
|---|---|---|---|---|---|---|---|---|---|
| 2 | -CN | $-S-C_2H_5$ | -CHO | -H | $-NH-CO-C_2H_5$ | -H | -H | $-CH_3$ | blau |
| 3 | -CN | -Cl | -CHO | -H | $-NH-CO-CH_3$ | $-C_2H_5$ | -H | -H | marineblau |
| 4 | -CN | -Cl | -CHO | -H | $-O-CO-CH_3$ | -H | $2-CH_3$ | -H | blau/violett |
| 5 | -CN | -Cl | -CHO | -H | $-O-CO-C_2H_5$ | -H | $2-CH_3$ | -H | blau/violett |
| 6 | -CN | -Cl | -CHO | -H | $-O-CH_3$ | -H | $2-CH_3$ | -H | marineblau |
| 7 | -CN | -Cl | -CHO | -H | $-NH-CO-CH_3$ | -H | -H | -H | marineblau |
| 8 | -CN | -Cl | -CHO | -H | $-NH-CO-CH_3$ | $-CH_2-CH(OH)-C_2H_5$ | -H | -H | blau |
| 9 | -CN | -Br | -CHO | -H | $-NH-CO-CH_3$ | -H | -H | -H | blau/violett |
| 10 | -CN | -Cl | -CHO | $-CO-O-C_2H_5$ | $-NH-CO-CH_3$ | -H | -H | -H | blau |
| 11 | -CN | -Cl | -CHO | -H | $-NH-CO-CH_3$ | $-(CH_2)_2-O-CO-CH_3$ | -H | -H | marineblau |
| 12 | -CN | -Cl | -CN | -H | $-NH-CO-CH_3$ | $-(CH_2)_2-OH$ | -H | -H | marineblau |
| 13 | -CN | -Cl | -CHO | -H | $-NH-CO-C_2H_5$ | $-(CH_2)_2-OH$ | -H | -H | marineblau |
| 14 | -CN | -Cl | -CHO | -H | $-NH-CO-C_3H_7$ | $-(CH_2)_2-OH$ | -H | -H | blau |
| 15 | -CN | -Cl | -CHO | -H | $-NH-CO-CH_3$ | $-C_4H_9$ | -H | -Cl | blau |
| 16 | -CN | -Cl | -CHO | -H | $-O-CH_3$ | -H | $2-CH_3$ | -H | violett |
| 17 | -CN | -Cl | -CN | -H | $-NHCOCH_3$ | -H | -H | -H | blau |
| 18 | $-CO-O-C_2H_5$ | -Cl | -CHO | -H | $-NH-CO-CH_3$ | $-(CH_2)_2-OH$ | -H | -H | violett |
| 19 | -CN | $-O-C_2H_5$ | -CHO | -H | $-NH-CO-CH_3$ | $-(CH_2)_2-OH$ | -H | -H | blau |

Tabelle 1 (Fortsetzung)

| Bsp. | $R^1$ | $R^2$ | $R^3$ | $R^4$ | $R^5$ | $R^6$ | $R^7$ | $R^8$ | Farbton auf Polyester |
|---|---|---|---|---|---|---|---|---|---|
| 20 | -CN | -S-Ph | -CHO | -H | $-NH-CO-C_2H_5$ | $-C_2H_5$ | -H | $-CH_3$ | blau |
| 21 | -CN | $-SO_2-Ph$ | -CHO | -H | $-NH-CO-C_2H_5$ | $-(CH_2)_2-O-C_2H_5$ | -H | $-C_2H_5$ | blau |
| 22 | -CN | $-S-CH_3$ | -CHO | -H | $-O-CH_3$ | -H | $2-CH_3$ | -H | violett |
| 23 | -CN | $-SO_2-Ph$ | -CHO | -H | $-NH-CO-CH_3$ | -H | -H | $-CH_3$ | grün/blau |
| 24 | -CN | $-SO_2-Ph$ | -CHO | -H | $-NH-CO-CH_3$ | -H | -H | $-CH(CH_3)_2$ | blau |
| 25 | -CN | $-S-CH_3$ | -CHO | -H | $-NH-CO-C_2H_5$ | -H | -H | -H | blau |
| 26 | -CN | -Cl | -CHO | -H | $-NH-CO-C_2H_5$ | $-(CH_2)_2-O-CO-CH_3$ | -H | -H | blau |
| 27 | -CN | -Cl | -CHO | -H | $-NH-CO-C_2H_5$ | -H | -H | -H | blau |
| 28 | -CN | -Cl | -CHO | -H | $-NH-CO-C_4H_9$ | $-CH_3$ | -H | -H | blau |
| 29 | -CN | -Cl | -CHO | -H | $-NH-CO-CH_3$ | $-(CH_2)_2-OH$ | $3-CH_3$ | $-CH_3$ | blau |
| 30 | -CN | -Cl | -CHO | -H | $-NH-CO-CH_3$ | $-(CH_2)_2-O-C_2H_5$ | -H | $-CH_3$ | blau |
| 31 | -CN | -Cl | -CHO | -H | $-NH-CO-CH_3$ | $-CH_2-CH=CH_2$ | -H | -H | blau |
| 32 | -CN | -Cl | -CHO | -H | $-NH-CO-CH_3$ | $-(CH_2)_2-OH$ | $3-OCH_3$ | $-O-CH_3$ | blau |
| 33 | -CN | -Cl | -CN | -H | $-NH-CO-C_2H_5$ | $-(CH_2)_2-OH$ | -H | -H | blau |
| 34 | -CN | -Cl | -CN | -H | $-NH-CO-CH_3$ | $-C_3H_7$ | -H | $-CH_3$ | blau |
| 35 | -CN | -Cl | -CHO | -CN | $-NH-CO-C_2H_5$ | -H | -H | $-O-C_2H_5$ | blau |
| 36 | -CN | -Cl | -CHO | $-CO-NH_2$ | $-NH-CO-CH_3$ | -H | -H | -H | blau |
| 37 | -CN | -Cl | -CHO | $-CO-NH_2$ | $-NH-CO-CH_3$ | -H | -H | -H | blau |
| 38 | -CN | -Cl | -CHO | -H | $-NH-CO-CH_3$ | $-(CH_2)_3-OH$ | -H | -H | marineblau |
| 39 | -CN | -Cl | -CHO | -H | $-NH-CO-C_2H_5$ | $-(CH_2)_2-O-CO-C_2H_5$ | -H | -H | marineblau |
| 40 | $-CO-O-C_2H_5$ | -Cl | -CHO | -H | $-NH-CO-CH_3$ | -H | -H | -H | blau/violett |
| 41 | $-CO-O-C_2H_5$ | -Cl | -CHO | -H | $-O-CH_3$ | $-C_2H_5$ | $2-CH_3$ | -H | violett |

Tabelle 1 (Fortsetzung)

| Bsp. | $R^1$ | $R^2$ | $R^3$ | $R^4$ | $R^5$ | $R^6$ | $R^7$ | $R^8$ | Farbton auf Polyester |
|---|---|---|---|---|---|---|---|---|---|
| 42 | $-CO-O-C_2H_5$ | -Cl | -CHO | -H | $-NH-CO-CH_3$ | $-(CH_2)_2-OH$ | $3-OCH_3$ | $-O-CH_3$ | marineblau |
| 43 | -CN | -Cl | -CHO | -H | $-NH-CO-CH_3$ | $-(CH_2)_2-OH$ | -H | $-O-C_2H_5$ | marineblau |
| 44 | -CN | $-SO_2-Ph$ | -CHO | -H | $-NH-CO-CH_3$ | $-(CH_2)_2-OH$ | -H | -H | marineblau |
| 45 | -CN | $-SO_2-Ph$ | -CHO | -H | $-NH-CO-CH_3$ | -H | -H | -H | blau |
| 46 | -CN | $-S-CH_3$ | -CHO | -H | $-NH-CO-CH_3$ | -H | -H | -H | blau |
| 47 | -CN | -Cl | -CN | -H | $-NH-CO-CH_3$ | -H | -H | $-O-CH_3$ | blau |
| 48 | -CN | -Cl | -CN | -H | $-NH-CO-CH_3$ | $-(CH_2)_2-OH$ | -H | $-O-CH_3$ | blau |
| 49 | -CN | -Cl | -CN | -H | $-NH-CO-CH_3$ | -H | -H | -H | blau |
| 50 | -CN | $-O-C_2H_5$ | -CHO | -H | $-NH-CO-CH_3$ | -H | -H | -H | blau |
| 51 | -CN | $-CH_3$ | -CN | -H | $-NH-CO-CH_3$ | $-(CH_2)_2-OH$ | -H | $-O-C_2H_5$ | marineblau |
| 52 | -CN | $-CH_3$ | -CN | -H | $-NH-CO-C_2H_5$ | $-(CH_2)_2-OH$ | -H | $-O-C_2H_5$ | marineblau |
| 53 | -CN | -Cl | -CHO | -H | $-O-C_2H_5$ | $-(CH_2)_2-OH$ | -H | $-O-C_2H_5$ | blau/violett |
| 54 | -CN | -Cl | -CN | -H | $-O-C_4H_9$ | $-(CH_2)_2-OH$ | -H | $-CH_3$ | rotstichig blau |
| 55 | -CN | $-O-C_2H_5$ | -CHO | -H | $-O-(CH_2)_2-OH$ | -H | $3-CH_3$ | $-O-CH_3$ | rotstichig blau |
| 56 | -CN | -Cl | -CN | -H | $-O-(CH_2)_2-OH$ | -H | $2-CH_3$ | $-C_2H_5$ | rotstichig blau |
| 57 | -CN | -Cl | -CN | -H | $-O-(CH_2)_2-O-CO-CH_3$ | $-(CH_2)_2-O-CO-CH_3$ | -H | $-CH_3$ | rotstichig marineblau |
| 58 | -CN | $-CH_3$ | -CN | -H | $-O-CO-O-CH_3$ | $-(CH_2)_2-O-CO-CH_3$ | -H | -H | rotstichig marineblau |

Tabelle 1 (Fortsetzung)

| Bsp. | $R^1$ | $R^2$ | $R^3$ | $R^4$ | $R^5$ | $R^6$ | $R^7$ | $R^8$ | Farbton auf Polyester |
|---|---|---|---|---|---|---|---|---|---|
| 59 | -CN | -Cl | -CHO | -H | $-O-CO-N(CH_3)_2$ | -H | $2-CH_3$ | -H | rotstichig blau |
| 60 | -CN | -Cl | -CHO | -H | $-O-CO-N(C_2H_5)_2$ | -H | $2-CH_3$ | $-CH_3$ | rotstichig blau |
| 61 | $-CO-O-CH_3$ | -Cl | -CN | -H | $-NH-CO-CH_3$ | $-(CH_2)_2-OH$ | -H | -H | blau |
| 62 | $-CO-O-CH_3$ | -Cl | -CHO | -H | $-NH-CO-CH_3$ | -H | -H | $-O-C_2H_5$ | blau |
| 63 | $-CO-O-CH_3$ | -Cl | -CHO | -H | $-NH-CO-CH_3$ | $-(CH_2)_2-OH$ | -H | -H | blau |
| 64 | -CN | $-CH(CH_3)_2$ | -CN | -H | $-NH-CO-C_2H_5$ | $-(CH_2)_2-OH$ | -H | -H | blau |
| 65 | -CN | $-CH_3$ | -CHO | -H | $-NH-CO-CH_3$ | $-(CH_2)_2-OH$ | -H | $-O-C_2H_5$ | blau |
| 66 | -CN | $-CH_3$ | -CHO | -H | $-O-CO-N(C_3H_7)_2$ | $-(CH_2)_2-OH$ | -H | -Cl | blau |
| 67 | -CN | $-C_2H_5$ | -CN | -H | $-NH-CO-CH_3$ | $-(CH_2)_2-OH$ | -H | -H | blau |
| 68 | -CN | $-CH_3$ | -CN | -H | -O-CO-N 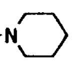 | $-(CH_2)_2-OH$ | -H | -H | blau |
| 69 | -CN | $-(CH_2)_2-O-CH_3$ | -CN | -H | $-NH-CO-C_2H_5$ | $-(CH_2)_2-OH$ | -H | -H | blau |

Beispiel 70

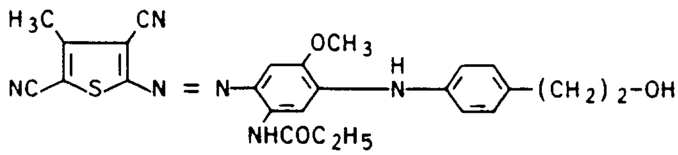

Eine Lösung aus 3,8 g (0,01 mol) 2-(2'-Propionylamino-4',5'-dimethoxyphenylazo)-3-cyano-4-methyl-5-cyanothiophen und 2,1 g (0,015 mol) p-(2-Hydroxyethyl)-anilin in 100 ml N-Methylpyrrolidon wurde auf 120 °C erhitzt und 6 Stunden bei dieser Temperatur gerührt.

Nach dem Abkühlen wurde die Reaktionsmischung auf 500 ml Wasser gegeben. Der ausgefallene Farbstoff wurde abfiltriert, neutral gewaschen und getrocknet.

Es wurden 4,0 g Farbstoff erhalten, was einer Ausbeute von 82 % entspricht: Schmp.: 103 °C; $\lambda_{max}$ = 604 nm (Aceton).

Nach dem in Beispiel 1 beschriebenen Hochtemperatur-Verfahren wurde mit dem Farbstoff auf Polyesterstapelfasergewebe eine echte dunkelblaue Färbung erhalten.

Die in Tabelle 2 aufgeführten Farbstoffe Ib wurden analog Beispiel 70 mit ähnlichen Ausbeuten hergestellt und ebenfalls auf ihr Färbeverhalten untersucht.

Tabelle 2

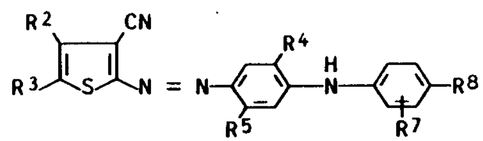

Ib

| Bsp. | $R^2$ | $R^3$ | $R^4$ | $R^5$ | $R^7$ | $R^8$ | Farbton auf Polyester |
|---|---|---|---|---|---|---|---|
| 71 | $-CH_3$ | -CN | $-O-CH_3$ | $-NH-CO-CH_3$ | -H | $-O-C_2H_5$ | blau |
| 72 | $-CH_3$ | -CN | $-O-C_2H_5$ | $-NH-CO-CH_3$ | -H | $-O-C_2H_5$ | blau |
| 73 | $-CH_3$ | -CN | $-O-CH_3$ | $-NH-CO-CH_3$ | -H | $-O-(CH_2)_2-OH$ | blau |
| 74 | -Cl | -CN | $-O-(CH_2)_2-OH$ | $-NH-CO-CH_3$ | -H | $-O-C_2H_5$ | blau |
| 75 | -Cl | -CN | $-O-CH_3$ | $-NH-CO-CH_3$ | -H | $-(CH_2)_2-OH$ | blau |
| 76 | -Cl | -CHO | $-O-CH_3$ | $-NH-CO-C_2H_5$ | -H | $-(CH_2)_2-OH$ | blau |
| 77 | -Cl | -CHO | $-O-C_2H_5$ | $-NH-CO-CH_3$ | -H | $-(CH_2)_2-OH$ | blau |
| 78 | -Cl | -CHO | $-O-CH_3$ | $-NH-CO-CH_3$ | -H | $-O-C_2H_5$ | grünstichig blau |
| 79 | -Cl | -CHO | $-CO-O-CH_3$ | $-NH-CO-CH_3$ | $3-O-CH_3$ | $-O-CH_3$ | blau |

## Patentansprüche

1. Thiophenazofarbstoffe der allgemeinen Formel I

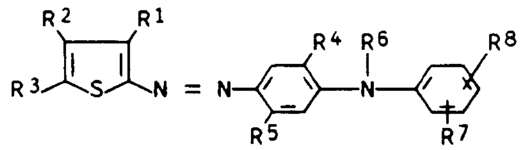

I

in welcher die Substituenten folgende Bedeutung haben:

$R^1$ eine Cyanogruppe oder eine $C_1$-$C_4$-Alkoxycarbonylgruppe;

$R^2$ Halogen;
eine $C_1$-$C_6$-Alkylgruppe, deren C-Kette durch ein oder zwei Sauerstoffatome in Etherfunktion unterbrochen sein kann;
eine $C_1$-$C_6$-Alkoxygruppe oder eine $C_1$-$C_6$-Alkylthiogruppe, die jeweils Phenyl als Substituent tragen kann;
eine Phenylthiogruppe oder eine Phenylsulfonylgruppe, die jeweils Halogen, $C_1$-$C_4$-Alkyl oder $C_1$-$C_4$-Alkoxy als Substituenten tragen kann;

$R^3$ eine Cyanogruppe;
eine $C_1$-$C_4$-Alkanoyl-, Benzoyl-, $C_1$-$C_4$-Alkylsulfonyl- oder Phenylsulfonylgruppe;

$R^4$ Wasserstoff;
eine Cyanogruppe;
eine $C_1$-$C_4$-Alkoxygruppe, die Hydroxy oder $C_1$-$C_4$-Alkoxy als Substituenten tragen kann;
eine $C_1$-$C_4$-Alkoxycarbonyl-, Aminocarbonyl- oder Mono- oder Di-$C_1$-$C_4$-alkylaminocarbonylgruppe;

$R^5$ Wasserstoff;
eine $C_1$-$C_4$-Alkylgruppe oder eine $C_1$-$C_4$-Alkoxygruppe, die jeweils Hydroxy, $C_1$-$C_4$-Alkoxy oder $C_1$-$C_4$-Alkanoyloxy als Substituenten tragen kann;
eine $C_1$-$C_4$-Alkanoyloxygruppe, die Hydroxy, Chlor, Cyano, $C_1$-$C_4$-Alkoxy oder Phenoxy als Substituenten tragen kann;
eine $C_1$-$C_6$-Alkanoylaminogruppe, die Hydroxy, Chlor, Cyano, $C_1$-$C_4$-Alkoxy, Phenoxy oder $C_1$-$C_4$-Alkanoyloxy als Substituenten tragen kann;
eine Benzoylaminogruppe, die Chlor, Cyano, Nitro, $C_1$-$C_4$-Alkyl, $C_1$-$C_4$-Alkoxy, $C_1$-$C_4$-Alkoxycarbonyl oder $C_1$-$C_4$-Alkylsulfonyl als Substituenten tragen kann;
eine $C_1$-$C_4$-Alkoxycarbonyloxygruppe oder eine Di-$C_1$-$C_4$-alkylaminocarbonyloxygruppe, deren Alkylgruppen unter Ausbildung eines das Stickstoffatom der Aminogruppe enthaltenden 6- oder 7-gliedrigen Ringes miteinander verbunden sein können:

$R^6$ Wasserstoff;
eine $C_1$-$C_{10}$-Alkylgruppe, deren C-Kette durch ein bis drei Sauerstoffatome in Etherfunktion unterbrochen sein kann und die Hydroxy, Halogen, Cyano, $C_1$-$C_4$-Alkanoyloxy oder $C_1$-$C_4$-Alkoxycarbonyl als Substituenten tragen kann;
eine $C_3$-$C_5$-Alkenylgruppe, die Hydroxy, Halogen, $C_1$-$C_4$-Alkoxy oder $C_1$-$C_4$-Alkanoyloxy als Substituenten tragen kann;

$R^7$ Wasserstoff;
Halogen;
eine Cyanogruppe;
eine der definitionsgemäßen Alkylgruppen $R^6$;
eine $C_1$-$C_4$-Alkoxygruppe;
eine Aminogruppe oder eine Mono- oder Di-$C_1$-$C_4$-alkylaminogruppe;

$R^8$ einer der Reste $R^7$.

2. Thiophenazofarbstoffe der allgemeinen Formel I nach Anspruch 1, in welcher die Substituenten folgende Bedeutung haben:

$R^1$ eine Cyanogruppe;

$R^2$ Chlor oder Brom;
eine $C_1$-$C_4$-Alkylgruppe oder eine $C_1$-$C_4$-Alkoxygruppe;

$R^3$ eine Cyanogruppe oder eine Formylgruppe;
$R^4$ Wasserstoff;
eine $C_1$-$C_4$-Alkoxygruppe, die Hydroxy oder $C_1$-$C_4$-Alkoxy als Substituenten tragen kann;
eine $C_1$-$C_4$-Alkoxycarbonylgruppe;
$R^5$ eine $C_1$-$C_2$-Alkoxygruppe, die Hydroxy, $C_1$-$C_2$-Alkoxy oder $C_1$-$C_2$-Alkanoyloxy als Substituenten tragen kann;
eine $C_1$-$C_4$-Alkanoyloxygruppe oder eine $C_1$-$C_4$-Alkanoylaminogruppe, die jeweils Hydroxy, Cyano oder $C_1$-$C_4$-Alkoxy als Substituenten tragen kann;
eine Di-$C_1$-$C_4$-alkylaminocarbonyloxygruppe;
$R^6$ Wasserstoff;
eine $C_1$-$C_6$-Alkylgruppe, deren C-Kette durch ein oder zwei Sauerstoffatome in Etherfunktion unterbrochen sein kann und die Hydroxy oder $C_1$-$C_4$-Alkanoyloxy als Substituenten tragen kann;
eine $C_3$-$C_5$-Alk-2-en-1-ylgruppe, die Hydroxy oder Chlor als Substituenten tragen kann;
$R^7$ Wasserstoff;
Halogen;
eine $C_1$-$C_4$-Alkylgruppe, die Hydroxy als Substituent tragen kann, oder eine $C_1$-$C_4$-Alkoxygruppe;
$R^8$ einer der vorgenannten Reste $R^7$.

3. Thiophenazofarbstoffe der allgemeinen Formel I nach Anspruch 1, in welcher die Substituenten folgende Bedeutung haben:
$R^1$ eine Cyanogruppe;
$R^2$ Chlor;
eine $C_1$-$C_3$-Alkylgruppe;
$R^3$ eine Cyanogruppe oder eine Formylgruppe;
$R^4$ Wasserstoff;
eine $C_1$-$C_4$-Alkoxygruppe, die Hydroxy oder $C_1$-$C_4$-Alkoxy als Substituenten tragen kann;
$R^5$ eine $C_1$-$C_2$-Alkoxygruppe, die Hydroxy, $C_1$-$C_2$-Alkoxy oder $C_1$-$C_2$-Alkanoyloxy als Substituenten tragen kann;
eine $C_1$-$C_4$-Alkanoyloxygruppe oder eine $C_1$-$C_4$-Alkanoylaminogruppe, die jeweils $C_1$-$C_4$-Alkoxy als Substituent tragen kann;
eine Di-$C_1$-$C_4$-alkylaminocarbonyloxygruppe;
$R^6$ Wasserstoff;
eine $C_1$-$C_4$-Alkylgruppe, deren C-Kette durch ein Sauerstoffatom in Etherfunktion unterbrochen sein kann und die Hydroxy als Substituent tragen kann;
$R^7$ Wasserstoff;
Chlor oder Brom;
eine $C_1$-$C_4$-Alkylgruppe, die Hydroxy als Substituent tragen kann, oder eine $C_1$-$C_4$-Alkoxygruppe;
$R^8$ Wasserstoff.

4. Verwendung von Thiophenazofarbstoffen der allgemeinen Formel I gemäß den Ansprüchen 1 bis 3 als Dispersionsfarbstoffe zum Färben von Textilgut.

5. Verwendung von Thiophenazofarbstoffen nach Anspruch 4 zum Färben von Polyestern.

## Claims

1. A thiopheneazo dye of the general formula I

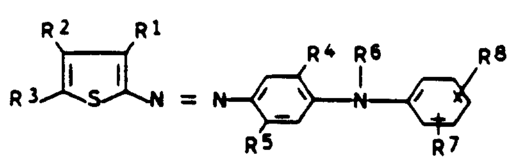

I

in which the substituents have the following meanings:

- $R^1$ is cyano or $C_1$-$C_4$-alkoxycarbonyl,
- $R^2$ is halogen, $C_1$-$C_6$-alkyl whose carbon chain may be interrupted by one or two oxygen atoms in ether function, $C_1$-$C_6$-alkoxy or $C_1$-$C_6$-alkylthio which may each be phenyl-substituted, or phenylthio or phenylsulfonyl, which may each be substituted by halogen, $C_1$-$C_4$-alkyl or $C_1$-$C_4$-alkoxy,
- $R^3$ is cyano, $C_1$-$C_4$-alkanoyl, benzoyl, $C_1$-$C_4$-alkylsulfonyl or phenylsulfonyl,
- $R^4$ is hydrogen, cyano, $C_1$-$C_4$-alkoxy which may be hydroxyl- or $C_1$-$C_4$-alkoxy-substituted, $C_1$-$C_4$-alkoxycarbonyl, aminocarbonyl or mono- or di-$C_1$-$C_4$-alkylaminocarbonyl,
- $R^5$ is hydrogen, $C_1$-$C_4$-alkyl or $C_1$-$C_4$-alkoxy, which may each be hydroxyl-, $C_1$-$C_4$-alkoxy- or $C_1$-$C_4$-alkanoyloxy-substituted, $C_1$-$C_4$-alkanoyloxy which may be hydroxyl-, chlorine-, cyano-, $C_1$-$C_4$-alkoxy- or phenoxy-substituted, $C_1$-$C_6$-alkanoylamino which may be hydroxyl-, chlorine-, cyano-, $C_1$-$C_4$-alkoxy-, phenoxy- or $C_1$-$C_4$-alkanoyloxy-substituted, benzoylamino which may be chlorine-, cyano-, nitro-, $C_1$-$C_4$-alkyl-, $C_1$-$C_4$-alkoxy-, $C_1$-$C_4$-alkoxycarbonyl- or $C_1$-$C_4$-alkylsulfonyl-substituted, or $C_1$-$C_4$-alkoxycarbonyloxy, or di-$C_1$-$C_4$-alkylaminocarbonyloxy where the alkyl groups may be linked to one another to form a 6- or 7-membered ring containing the nitrogen atom of the amino group,
- $R^6$ is hydrogen, $C_1$-$C_{10}$-alkyl whose carbon chain may be interrupted by one to three oxygen atoms in ether function and which may be hydroxyl-, halogen-, cyano-, $C_1$-$C_4$-alkanoyloxy- or $C_1$-$C_4$-alkoxycarbonyl-substituted, or $C_3$-$C_5$-alkenyl which may be substituted by hydroxyl, halogen, $C_1$-$C_4$-alkoxy or $C_1$-$C_4$-alkanoyloxy,
- $R^7$ is hydrogen, halogen, cyano, alkyl $R^6$ of the type defined, $C_1$-$C_4$-alkoxy, amino or mono- or di-$C_1$-$C_4$-alkylamino, and
- $R^8$ has one of the meanings of $R^7$.

**2.** A thiopheneazo dye of the general formula I as claimed in claim 1, in which the substituents have the following meanings:

- $R^1$ is cyano,
- $R^2$ is chlorine, bromine, $C_1$-$C_4$-alkyl or $C_1$-$C_4$-alkoxy,
- $R^3$ is cyano or formyl,
- $R^4$ is hydrogen, $C_1$-$C_4$-alkoxy which may be hydroxyl- or $C_1$-$C_4$-alkoxy-substituted or $C_1$-$C_4$-alkoxycarbonyl,
- $R^5$ is $C_1$-$C_2$-alkoxy which may be hydroxyl-, $C_1$-$C_2$-alkoxy- or $C_1$-$C_2$-alkanoyloxy-substituted, or is $C_1$-$C_4$-alkanoyloxy or $C_1$-$C_4$-alkanoylamino which may each be substituted by hydroxyl, cyano or $C_1$-$C_4$-alkoxy, or is di-$C_1$-$C_4$-alkylaminocarbonyloxy,
- $R^6$ is hydrogen, $C_1$-$C_6$-alkyl whose carbon chain may be interrupted by one or two oxygen atoms in ether function and which may be hydroxyl- or $C_1$-$C_4$-alkanoyloxy-substituted, or $C_3$-$C_5$-alk-2-en-1-yl which may be substituted by hydroxyl or chlorine,
- $R^7$ is hydrogen, halogen, $C_1$-$C_4$-alkyl which may be hydroxyl-substituted or $C_1$-$C_4$-alkoxy, and
- $R^8$ has one of the aforementioned meanings of $R^7$.

**3.** A thiopheneazo dye of the general formula I of claim 1, in which the substituents have the following meanings:

- $R^1$ is cyano,
- $R^2$ is chlorine or $C_1$-$C_3$-alkyl,
- $R^3$ is cyano or formyl,
- $R^4$ is hydrogen or is $C_1$-$C_4$-alkoxy which may be substituted by hydroxyl or $C_1$-$C_4$-alkoxy,
- $R^5$ is $C_1$-$C_2$-alkoxy which may be hydroxyl-, $C_1$-$C_2$-alkoxy- or $C_1$-$C_2$-alkanoyloxy-substituted, or is $C_1$-$C_4$-alkanoyloxy or $C_1$-$C_4$-alkanoylamino which may each be substituted by $C_1$-$C_4$-alkoxy, or is di-$C_1$-$C_4$-alkylaminocarbonyloxy,
- $R^6$ is hydrogen or $C_1$-$C_4$-alkyl whose carbon chain may be interrupted by one oxygen atom in ether function and which may be substituted by hydroxyl,
- $R^7$ is hydrogen, chlorine, bromine, $C_1$-$C_4$-alkyl which may be hydroxyl-substituted or $C_1$-$C_4$-alkoxy, and
- $R^8$ is hydrogen.

**4.** Use of thiopheneazo dyes of the general formula I of claims 1 to 3 as disperse dyes for dyeing textile material.

**5.** Use of thiopheneazo dyes according to claim 4 for dyeing polyesters.

**Revendications**

**1.** Colorants azoïques de la série du thiophène de formule générale I

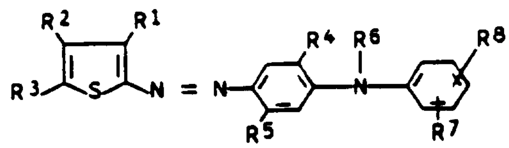

I

dans laquelle les substituants ont les significations suivantes:

$R^1$ groupement cyano ou groupement (alcoxy en $C_1$-$C_4$)carbonyle;

$R^2$ atome d'halogène;
groupement alkyle en $C_1$-$C_6$ dont la chaîne carbonée peut être interrompue par un ou deux atomes d'oxygène en fonction éther;
groupement alcoxy en $C_1$-$C_6$ ou groupement alkylthio en $C_1$-$C_6$, dont chacun peut porter un reste phényle comme substituant;
groupement phénylthio ou groupement phénylsulfonyle, dont chacun peut porter un atome d'halogène, un reste alkyle en $C_1$-$C_4$ ou un reste alcoxy en $C_1$-$C_4$ comme substituants;

$R^3$ groupement cyano;
groupement alcanoyle en $C_1$-$C_4$, benzoyle, alkylsulfonyle en $C_1$-$C_4$ ou phénylsulfonyle;

$R^4$ atome d'hydrogène;
groupement cyano;
groupement alcoxy en $C_1$-$C_4$ qui peut porter un reste hydroxy ou alcoxy en $C_1$-$C_4$ comme substituants;
groupement (alcoxy en $C_1$-$C_4$)carbonyle, aminocarbonyle ou mono- ou di-(alkyle en $C_1$-$C_4$)-aminocarbonyle;

$R^5$ atome d'hydrogène;
groupement alkyle en $C_1$-$C_4$ ou groupement alcoxy en $C_1$-$C_4$, dont chacun peut porter un reste hydroxy, alcoxy en $C_1$-$C_4$ ou alcanoyloxy en $C_1$-$C_4$ comme substituants;
groupement alcanoyloxy en $C_1$-$C_4$, qui peut porter un reste hydroxy, un atome de chlore, un reste cyano, alcoxy en $C_1$-$C_4$ ou phénoxy comme substituants;
groupement alcanoylamino en $C_1$-$C_6$, qui peut porter un reste hydroxy, un atome de chlore, un reste cyano, alcoxy en $C_1$-$C_4$, phénoxy ou alcanoyloxy en $C_1$-$C_4$ comme substituants;
groupement benzoylamino, qui peut porter un atome de chlore, un rente cyano, nitro, alkyle en $C_1$-$C_4$, alcoxy en $C_1$-$C_4$, (alcoxy en $C_1$-$C_4$)carbonyle ou alkylsulfonyle en $C_1$-$C_4$ comme substituants;
groupement (alcoxy en $C_1$-$C_4$)carbonyloxy ou groupement di-(alkyle en $C_1$-$C_4$)-aminocarbonyloxy, dont les groupements alkyle peuvent être reliés entre eux en formant un noyau à 6 ou 7 termes contenant l'atome d'azote du groupement amino;

$R^6$ atome d'hydrogène;
groupement alkyle en $C_1$-$C_{10}$, dont la chaîne carbonée peut être interrompue par un à trois atomes d'oxygène en fonction éther et qui peut porter un reste hydroxy, un atome d'halogène, un reste cyano, alcanoyloxy en $C_1$-$C_4$ ou (alcoxy en $C_1$-$C_4$)carbonyle en tant que substituants;
groupement alcényle en $C_3$-$C_5$, qui peut porter un reste hydroxy, un atome d'halogène ou un reste alcoxy en $C_1$-$C_4$ ou alcanoyloxy en $C_1$-$C_4$ comme substituants;

$R^7$ atome d'hydrogène;
atome d'halogène;
groupement cyano;
l'un des groupements alkyle définis à propos de $R^6$; groupement alcoxy en $C_1$-$C_4$;
groupement amino ou groupement mono- ou di-(alkyle en $C_1$-$C_4$)amino;

$R^8$ l'un des restes $R^7$.

**2.** Colorants azoïques de la série du thiophène de formule générale I selon la revendication 1, dans lesquels les substituants ont les significations suivantes:

$R^1$ groupement cyano;

$R^2$ atome de chlore ou de brome; groupement alkyle en $C_1$-$C_4$ ou groupement alcoxy en $C_1$-$C_4$;

$R^3$ groupement cyano ou groupement formyle;

$R^4$ atome d'hydrogène, groupement alcoxy en $C_1$-$C_4$ qui peut porter un reste hydroxy ou alcoxy en $C_1$-$C_4$ comme substituants; groupement (alcoxy en $C_1$-$C_4$)carbonyle;

$R^5$ groupement alcoxy en $C_1$-$C_2$, qui peut porter un reste hydroxy, alcoxy en $C_1$-$C_2$ ou alcanoyloxy en $C_1$-$C_2$ comme substituants; groupement alcanoyloxy en $C_1$-$C_4$ ou groupement alcanoylamino en $C_1$-$C_4$, dont chacun peut porter un reste hydroxy, cyano ou alcoxy en $C_1$-$C_4$ comme substituants; groupement di-(alkyl en $C_1$-$C_4$)aminocarbonyloxy;

$R^6$ atome d'hydrogène; groupement alkyle en $C_1$-$C_6$, dont la chaîne carbonée peut être interrompue par un ou deux atomes d'oxygène en fonction éther et qui peut porter un reste hydroxy ou alcanoyloxy en $C_1$-$C_4$ comme substituants; groupement alc-2-ène-1-yle en $C_3$-$C_5$, qui peut porter un reste hydroxy ou un atome de chlore comme substituants;

$R^7$ atome d'hydrogène; atome d'halogène; groupement alkyle en $C_1$-$C_4$, qui peut porter un reste hydroxy comme substituant, ou groupement alcoxy en $C_1$-$C_4$;

$R^8$ l'un des restes $R^7$ susmentionnés.

**3.** Colorants azoïques de la série du thiophène de formule générale I selon la revendication 1 dans lesquels les substituants ont les significations suivantes:

$R^1$ groupement cyano;

$R^2$ atome de chlore; groupement alkyle en $C_1$-$C_3$;

$R^3$ groupement cyano ou groupement formyle;

$R^4$ atome d'hydrogène; groupement alcoxy en $C_1$-$C_4$ qui peut porter un reste hydroxy ou alcoxy en $C_1$-$C_4$ comme substituants;

$R^5$ groupement alcoxy en $C_1$-$C_2$, qui peut porter un reste hydroxy, alcoxy, en $C_1$-$C_2$ ou alcanoyloxy en $C_1$-$C_2$ comme substituants; groupement alcanoyloxy, en $C_1$-$C_4$ ou groupement alcanoylamino en $C_1$-$C_4$, dont chacun peut porter un reste alcoxy en $C_1$-$C_4$ comme substituant; groupement di-(alkyle en $C_1$-$C_4$)aminocarbonyloxy;

$R^6$ atome d'hydrogène; groupement alkyle en $C_1$-$C_4$, dont la chaîne carbonée peut être interrompue par un atome d'oxygène en fonction éther et qui peut porter un reste hydroxy comme substituant;

$R^7$ atome d'hydrogène; atome de chlore ou de brome; groupement alkyle en $C_1$-$C_4$, qui peut porter un reste hydroxy comme substituant, ou groupement alcoxy en $C_1$-$C_4$;

$R^8$ atome d'hydrogène.

**4.** Utilisation de colorants azoïques de la série du thiophène de formule générale I selon l'une quelconque des revendications 1 à 3 comme colorants de dispersion pour la teinture de matières textiles.

**5.** Utilisation de colorants azoïques de la série du thiophène selon la revendication 4 pour la teinture de polyesters.